# EUROPEAN PATENT SPECIFICATION

(11) **EP 2 201 076 B1**
(45) Date of publication and mention of the grant of the patent: **16.02.2011**
(21) Application number: 07825592.4
(22) Date of filing: 28.08.2007
(51) Int. Cl.: C09J 5/00

(54) **METHOD OF PRODUCTION OF SOLID AND POROUS FILMS FROM PARTICULATE MATERIALS BY HIGH HEAT FLUX SOURCE**
VERFAHREN ZUR HERSTELLUNG VON FESTEN UND PORÖSEN FILMEN AUS TEILCHENFÖRMIGEN STOFFEN DURCH QUELLE HOHEN WÄRMEFLUSSES
PROCÉDÉ DE PRODUCTION DE FILMS SOLIDES ET POREUX À PARTIR DE MATIÈRES PARTICULAIRES PAR SOURCE À FLUX DE CHALEUR ÉLEVÉE

(43) Date of publication of application: 30.06.2010
(73) Proprietor: Commissariat à l'Énergie Atomique et aux Énergies Alternatives, 75015 Paris (FR); Société de commercialisation des produits de la recherche appliquée Socpra - Sciences et Génie s.e.c, Sherbrooke QC J1K 2R1 (CA)
(72) Inventor: MOSTAJERAN GOORTANI, Behnam, Sherbrooke, Québec J1L 1P4 (CA); GITZHOFER, François, Sherbrooke, Québec J1N 3B6 (CA); BOUYER, Etienne, F-38100 Grenoble (FR)
(74) Representative: Quantin, Bruno Marie Henri
(86) International application number: PCT/IB2007/003350
(87) International publication number: WO 2009/027764

(56) References cited:
- US-A- 5 376 442

## Description

### Field of the invention

The invention relates to a method of production of solid and porous films from particulate materials by a high heat flux source, and more particularly to the high rate formation of process solid and porous films, in a continuous or batch process, involving only simple and clean steps.

As known, process films correspond to porous and solid thin or thick films which may be treated (or processed) during the production of various types of products or components, such as in the field of micro-electronics, metallurgy, ceramic, filtering, fixed bed catalysts, or composite technologies.

It has already been proposed to produce thick films (thickness of at least several hundreds microns or preferably more that one millimetre) from slicing an ingot of the proper material.

For thinner films (several tens of microns and less), it has also been proposed to generate a damaged layer within a donor substrate and to provoke the separation of a thin film by rupture at this damaged layer.

Another option of interest is to obtain solid and porous films from powder particles (in other words, from particulate materials).

### State of the art

Several solutions have already been proposed for producing films from powder particles. In the following paragraphs, some of these methods along with their limitations are reviewed.

**Physical and chemical vapor depositions PVD and CVD:** In these methods, the material to be processed (or a chemical compound of the material in CVD method) is sprayed into a heating zone (plasma, laser, or microwave source) and the resulting vapors are condensed on a colder substrate to form the final layer of the film (in CVD: after reaction by another material). Very high purity materials can be synthesized by these methods; however they are used for small-scale synthesis of coatings and the final product is not a separate film. US Pat. 6994894 for example describes a CVD process for preparation of SiO dielectric films for semiconductors applications. US Pat. 6881058 discloses a PVD apparatus for the formation of a patterned film applied in electronics. US Pat. 4788082 proposes an atmospheric vapor deposition apparatus (chemical and physical vapor deposition) where the vapors are carried by a jet of inert gas and impinged into a cold substrate.

**Thermal Spraying (plasma or laser):** In this method, the solid material to be processed is sprayed into a heating zone (plasma, laser, or microwave source) and the resulting melted droplets are impacted onto a substrate to form the final layer of the film. Depending on the heating zone power, a fraction of the material may evaporate. The disadvantage of this method, in spite of relatively high rates of film or coating formation, is that the process is not simple and there is always the possibility of contamination of the film or coating by the substrate and of deposition of the powder on other parts of the equipment. Benmansour et al. (2004), in "Diagnostic by emission spectroscopy of an argon-hydrogen RF inductive thermal plasma for purification of metallurgical grade silicon", J. Phys. D, Appl. Phys. 37 2966-2974, for example, uses a plasma deposition technique to prepare Si films on ceramic substrates. US Pat. 7,032,808 uses thermal spraying so as to have a metal coating, followed by melting of the coating for the completion of process of making heat exchangers.

**Other standard methods:** Beside the above-mentioned techniques, other methods such as slicing (or dicing in electronics) and sintering have been used in the literature.

In slicing methods, a solid bulk of the material is sliced into films by saw or laser. However, this has the disadvantage of leading to large amounts of waste in the consumed raw materials.

In sintering processes, the cold-deposited particles are exposed to a heat source to melt and form a film. However, these methods have the disadvantage of being batch in nature and of not allowing so much control over the process of film formation. In US Pat. 7,148,286, for example, a process is described under which a film of TiO₂ in polyamide polymer is formed by conduction heat sintering. US Pat. 7,163,713 presents a method for making dense crack free films. This method produces porous coatings and is composed of three steps, i.e. formation of a particle layer on a rigid substrate, compression of the layer, and firing. US Pat. 4067727 proposes a continuous large scale sintering process for the agglomeration and purification of metallurgical powders. However, this process is not designed for the continuous formation of films.

One important application of the invention is the formation of solid films of silicon for photovoltaic cells applications, and specific comments may be made as follows in connection with the state of the art in this field.

Japanese patent reference JP - 5 270 813 describes a process where millimetre sized silicon powders are injected in an air direct current (dc) thermal plasma flame. The powder particles are melted during their time flight within the plasma and then are splashed onto a metal plate to build a solid coating after their rapid solidification. The metal plate typically consists of iron, copper, aluminium and alloys thereof and is covered with ceramic particles which can be silicon dioxide, silicon nitride or silicon carbide particles, and the silicon particles are fused to the metal plate. This method thus produces a substrate including the metal plate. Thus, such a method is not appropriate for forming a self-supported sheet or ribbon since the coating remains stuck or welded to the metal plate; in addition it does not lead to a dense coating. Further, when based on air direct current plasma, this method intrinsically does not allow the use of reactive plasma gases.

Another type of methods is known as Silicon Sheet from Powder (SSP). An example of such methods is disclosed in US - 4 690 797 (or DE - 35 36 743) which relates to a method for the manufacture of large area silicon crystal bodies for solar cells. Powder particles are compressed to form a layer of appropriate shape and then sintered and then melt to allow re-crystallisation of the silicon sheet. The melting step is conducted in two sub-steps where single side irradiation, by halogen radiation, is successively applied to both sides of the layer. Such a method needs a compression step, a sintering step and a two-temperature melting step, which is rather complicated and lengthy.

Still another technique is known from "Fabrication of dense thin sheets of y-TiAl by hot isostatic pressing of tape-cast monotapes" by Rahaman M.N et al, in Materials Science and Engineering A360 (2003) 169-175. Such technique involves several steps starting with a slurry preparation and ending with a sintering treatment. More particularly, TiAl powder particles (of less than 90 microns in particle size) are incorporated into a concentrated slurry by mixing with an organic binder in a solvent ; the system is tape-cast to form sheets with a thickness of 400-600 microns ; after insertion of the sheets into a Hot Isostatic Pressing (HIP) can, and after binder removal by thermal decomposition, HIP takes place at 1100°C under a pressure of 130 MPa to produce dense sheets with a thickness of 250-400 microns ; then the free, dense sheets with a finegrain microstructure are obtained by dissolution and oxidation of the HIP can. In other words this technique is complicated and lengthy and, in particular, does not allow continuous production.

The invention is intended to provide an innovative solution that overcomes at least some of the above-mentioned problems in the formation processes (continuous and batch) of solid and porous films. In another words, the invention is intended to provide a method whereby:
● the rate of film formation is very high and/or
● the waste of materials is very low and/or
● there is the possibility to prepare a separable ultra-pure film of materials with no contamination, and/or,
● especially in small-scale applications, the process is very clean
   and/or
● there is no distribution of the powder on different parts of the equipment, and/or
● the process can be easily used for the continuous production of solid and porous films.

### Summary of the invention

One object of the invention is to provide a method for high rate production of films from particulate materials.

Another object of the invention is to provide a method of producing cheap Si layers with good characteristics without involving any slicing or separation step from a donor substrate or ingot.

Another object of the invention is to provide a method of producing compound films where the chemical composition of the film can be efficiently controlled.

Another object of the invention is to provide a multilayer film made from one and a same material or from different materials in order to obtain, when appropriate, either a composite film or a composition graded film.

Another object of the invention is to allow the production of non planar solid films in an easy manner, without complicated production devices.

A further object of the invention is to provide a continuous production method for long metallic or non-metallic or composite solid /porous films.

For that purpose the invention proposes a method for producing a solid and/or porous film comprising the following steps
- preparing a suspension of solid particles in a solvent and spreading this suspension as a uniform layer of powder particles on a high melting point support,
- eliminating the solvent so as to dry the uniform layer of powder particles into a dried porous uniform layer,
- surface melting and/or sintering of the dried uniform layer by direct contact with a concentrated heat source having a controlled gas composition so as to melt and/or sinter this layer into a solid and/ or porous film.

It has been checked by several tests that solid films of good characteristics, in particular on the mechanical level (requesting a good density), may be obtained by the above method. Since this method does not involve any pressing step, it is simpler and cheaper than prior art methods.

Quite preferably, an additional step is provided consisting of a step of removing the solid and/or porous film from the high melting point support.

Quite preferably, the solvent is volatile and the elimination step consists in evaporating this solvent. This can prevent any thermal elevated temperature treatment; advantageously, the solvent evaporation is conducted at a temperature of no more than 100°C, preferably no more than 50°C, more preferably at about the room temperature.

The suspension preferably comprises a solid content in the range of 10-60 wt %, what corresponds to a suspension (or slurry) reasonably easy to spread onto a support for most types of powder particles and most type of solvent.

There exists a variety of spreading methods. Preferably, the spreading step comprises spraying the suspension onto the support, which is particularly easy to conduct. As an alternative, the spreading step comprises dipping the support in a bath of this suspension, which corresponds to a movement of the support with respect to the suspension.

According to another alternative, the spreading step comprises screen printing the layer on the support, what allows that the uniform layer be non continuous on the whole surface of the support and may be patterned ; this allows to obtain a solid film which is already patterned without the need of etching steps after production of a continuous solid film.

Any other wet method may be used for spreading the suspension onto the support.

A simple way to proceed is to use powder particles which all consist of one and a same material. However an alternative consists in using a mixture of at least two types of powder particles having different material compositions, what helps to obtain any aimed composition; the particle types have preferably different sizes.

Preferably, the concentrated heat source is a reactive gas plasma flame so that the material of the dried porous layer is purified when it is melted by the plasma flame. As a consequence, the final solid film not only is cheap and has good characteristics but further has a high purity.

An application of the above method which is of significance is the micro-electronic field; in such case, the powder particles preferably consist of at least one semiconductor material and the concentrated heat source comprises a plasma flame. An example of particular significance is the case where the powder particles essentially consist of silicon; however other similar materials may be used when operating the method of the invention, such as Germanium, AsGa, etc. When it is needed to provide a doped solid film, it is advantageous that at least one doping element is injected into the plasma flame so as to be melted together with dried porous layer. As an example, the doping elements are selected in the group comprised of boron and phosphorous.

When the powder particles are of semiconductor material it may be preferred that the concentrated heat source is Ar-H₂ plasma.

Another field of application of the invention is the field of ceramics. For that purpose, it is preferred that the powder consists of at least one oxide material and the concentrated heat source comprises a plasma flame. As an example, the oxide material is selected in the group comprised of silica and alumina. Preferably, the concentrated heat source is oxidizing Ar-O₂ plasma.

Another field of application of the invention is in filter, sparger, and fixed bed manufacturing technologies where porous films of different materials are used. For that purpose, it is preferred that the powder consists of spherical particles of metallic or ceramic materials. As an example, the spherical particles are selected in the group comprising Ni and ceramics, and the concentrated heat source is preferably plasma flame, for example reducing Ar-H₂ plasma ; the heat source flux and exposition time are preferably set so that the particles sinter together and a porous film is formed.

Still another field where the invention may be used is the field of composite materials. In such case, it is preferred that the powder particles consist of polymer materials.

Whatever the nature of the powder, it is advantageous that the particle size is comprised within the range of 0.1-100 microns and the thickness of the solid film is comprised within the range of 50-1000 microns (of course, the final thickness depends on the particle size).

It is of interest to note that the invention may be operated continuously. For that purpose, it is advantageous that the high melting point support is an endless moving belt and the spreading step and the melting/sintering step are performed by spreading and melting stations located along this endless moving belt, so that there is a continuous formation of the solid film.

Another possible improvement of the invention consists in conducting several cycles of formation of an elementary solid film. In other words an advantageous improvement of the invention consists of comprising at least another cycle comprising the preparation of a suspension, the spreading of the suspension on the solid film as an additional layer, the elimination of the solvent and the melting of this additional layer.

Several ways to take profit of these other cycles may be identified.

As a first example, the suspension used during this other cycle is the same as the suspension prepared for the suspension spread on the support, each cycle increasing the thickness of an homogeneous sheet formed on the support. It is thus possible to produce solid films of any composition with any thickness, depending on the needs of the operator.

As a second example the suspension used during this other cycle is of a composition different from the composition of the suspension spread on the support, so as to provide a solid film of graded composition parallel to its thickness.

### Short description of the drawings

Figure 1 is a schematic view of a first step of the method of the invention wherein a particles-solvent suspension is spread as a layer on a high melting point substrate.
Figure 2 is a schematic view of this layer formed on the substrate after the evaporation of the solvent.
Figure 3 is a schematic view of this dried layer being exposed to a high heat flux source such as plasma flame or laser.
Figure 4 is a schematic view of the film as formed, the remaining powders, and the substrate after exposing to the high heat flux source.
Figure 5 is a schematic view of a continuous production line operating a method of the invention.

### Detailed description of the invention

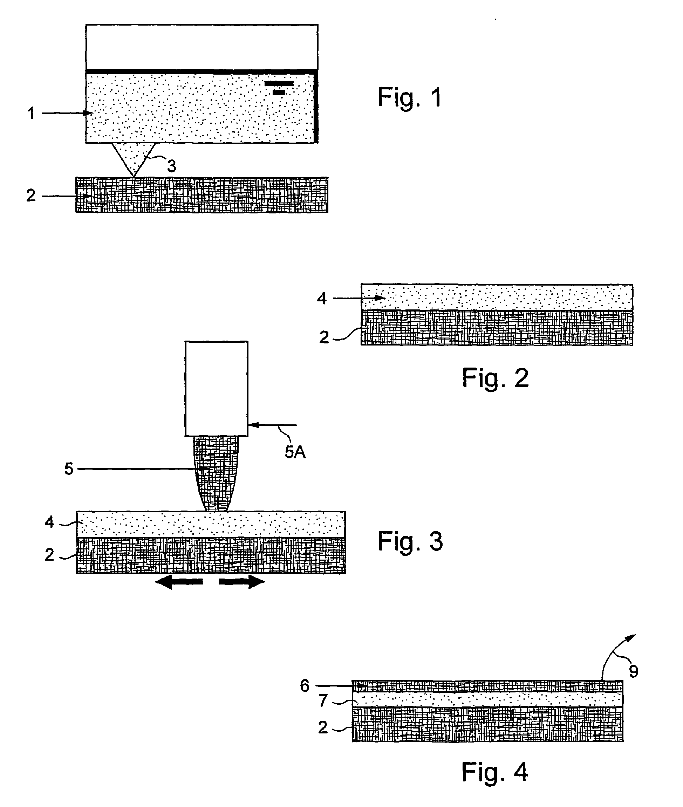

As generally described by figures 1 to 4, the method of the invention mainly comprises the following steps:
- preparing a suspension of solid particles in a solvent and spreading this suspension as a uniform layer of powder particles on a high melting point support,
- eliminating the solvent so as to dry the uniform layer of powder particles into a dried porous uniform layer,
- surface melting and/or sintering of the dried uniform layer by direct contact with a concentrated heat source having a controlled gas composition so as to melt and/or sinter this layer into a solid and/or porous film.

Depending on the conditions of the surface heating with the concentrated heat source and on the nature of the powder particles, this heating result in melting and/or sintering of these powder particles.

As an example, the solvent is a volatile solvent like methanol, so that its elimination is easy.

The suspension solid content strongly depends on the specific mass of the powder in order to get a uniform suspension. Typically, the solid content is, with respect to the whole suspension, in the following range: 10-60 wt %. It is within the normal skills of the man of the art to determine appropriate conditions for preparing a suspension with predefined powder particles.

Then the suspension, referenced as 1 in figure 1, within a reservoir, is spread on a support 2, through a nozzle 3 so as to form a uniform, i.e. a layer of uniform thickness.

The support 2 is made from a material having a high melting point, which means that in practice, it is in refractory material; as an example, this support is made of tungsten, but can also be made of molybdenum or of another refractory material.

The spreading of the suspension on the support may be made in several ways (US Pat. 6037289).

In figure 1, the spreading consists of a spraying with nozzle 3. As an alternative, the spreading may be achieved by dip-coating the support in a bath filled with this suspension. A still further possibility is to spread the suspension by screen-printing, provided that the viscosity of the suspension and the thickness of the needed final solid film are appropriate, what means that it allows to pattern the uniform layer (i.e. to pattern the layer of uniform thickness).

However the man skilled in the art may prefer any other wet method for spreading the suspension.

The thickness of the uniform layer is slightly higher than the thickness of the aimed solid film, but the difference is predictable, via some preliminary tests easy to perform.

The solvent is then eliminated. In the present case, it means that the volatile solvent is evaporated. This is preferably made at low temperature, typically at no more than 100 °C, preferably at no more than 50°C. The needed temperature depends on the solvent, which shall be selected depending on the powder particles. However it is to be noted that such "thermal" treatment is conducted at a temperature quite lower than any drying or sintering step in prior known methods. With some solvents it is even possible to obtain elimination at room temperature.

This elimination is normally conducted at the room pressure (1 atm).

The result of this method is the formation of a dried porous uniform layer, referred to as 4 in figure 2.

A third step then consists (see figure 3) in surface heating (resulting in melting or sintering) of the uniform dried layer 4 by a concentrated heat source 5 with controlled gas composition, such as Ar-H2 plasma flame, in practice with an appropriate relative movement between the layer and the source, for example a reciprocating movement. Depending on the flame heat flux and on the melting point of the powder particles, by appropriate repeating the reciprocating relative movement between the heat source and the support, the process may be completed on the whole layer 4, thus providing a solid film 6 on the support 2.

In practice, it is preferred, for the sake of simplicity, that the relative movement between the heat source and the support be obtained by moving the support with respect to the heat source.

The nature of the heat source is such that there is no contamination despite the direct heating of the upper surface of the layer 4. However, there may be cases where it is useful to add selected elements, such as doping elements when solid films of doped semiconductor material are to be produced. In such cases, such additional elements are preferably melted within the heat source and splashed on the layer being melted (see input arrow 5A of figure 3).

An interest of selecting a support from a refractory material is that the dried layer, even when it is melted in its entire thickness, do not stick thereto, so that a separation of the solid film from the support will be easy, when appropriate.

As shown in figure 4, the melting resulting from the heating of the layer 4 may be limited to only a part of the thickness of this layer, so that there may exist non-melted particles between the solid film and the support. When it exists, this powder non-melted sublayer (referred to as 7 in figure 4), helps to protect the underside of the film and prevents any contamination of the film by a contaminant coming from the support. In addition it may help the further separation of the solid film from the support. This explains why, in practice, it is advantageous to conduct the surface melting/sintering so as to leave unmelted a lower part of layer 4.

Of course, the sublayer 7, when it exists, has a relative thickness with respect to the solid film 6 which is quite smaller than what is shown in figure 4.

It may be noted that, provided that the relative movement between the heat source and the support is controlled appropriately, the thickness of what is melted is controlled and constant so that the thickness of film 6 may be reasonably constant even in presence of the sublayer.

Then the solid film may be easily detached from the support (see arrow 9), by any appropriate means.

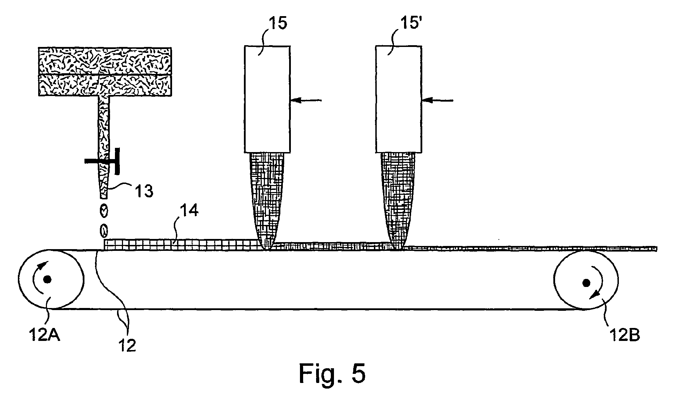

Whereas figures 1-4 disclose a batch process, figure 5 discloses an alternative way to operate the method of the invention, i.e. in a continuous manner, with a powder particle suspension which can be the same as in figure 1.

The installation of figure 5 comprises a heat resistant endless belt 12 rotating on rollers 12A and 12B. In the described example, three stations are located along this endless belt.

Station 11 corresponds to reservoir 1 of figure 1 and comprises a nozzle 13 through which a continuous stream of powder particle suspension is poured on the endless belt. The volatile solvent is spontaneously evaporated, so that no specific station is planned to that effect.

A consequence is that there is a dried porous uniform layer 14 of powder particles along the belt 12.

This layer 14 is brought to a second station comprising here a first concentrated heat source 15 and then to a third station comprising here a second heat source 15'. These concentrated heat sources have the same function as the heat source 5 of figure 3, it being noted that, since the belt is only moving along one direction, the surface melting / sintering of the dried layer 14 on its whole width can be made by several concentrated sources which remain still while facing different areas of the belt, or a single concentrated heat source which is reciprocated transverse to the belt.

It is here assumed that the heat sources 15 and 15' melt /sinter successively a same elongated area of the dried layer so as form eventually a solid / porous film which is continuous along the movement direction of the belt; thus the solid film may be collected continuously. This explains why, in figure 5, the solid film extends beyond roller 12B.

It is clear that there may be one or several endless belts in series for such continuous production.

The following examples relate the production of solid films of different composition and of different thicknesses, for various applications, such as electronics (solar cells), ceramics, metallurgy, chemical (such as fixed beds and temperature/corrosion resistant filters) but it shall be understood that the invention may also be applied to other fields, such as the production of composite organic layers. Further, when considering the example disclosed in connection with figures 1 to 4, it is clear that the invention may be easily used with supports which are not planar but have an appropriate 3D shape.

### Example 1 - in the field of electronics - preparation of ultra-pure silicon films for solar cell applications

High purity silicon particles (obtained from HCStark, Si powder, AX05, -10 micron, 99.995% purity), with a maximum size of 10 microns, were used along with electronic grade methanol to produce, due to the spontaneous evaporation of the acetone, a uniform porous layer of silicon on a tungsten support. The thickness of the layer was 1-2 mm. A reductive plasma flame (Ar-H₂) was used to melt the surface of the layer so as to obtain a uniform solid silicon film of a thickness of 70 to 500 micrometers.

Such solid silicon film had an upper surface completely bright without any visible pores, so that this solid film had a density which was satisfactorily, despite the fact that no pressure was used during the process. The back of the film was mat (in comparison to the bright upper surface) because of the unmelted powder particles located along the support itself.

### Example 2 - in the field of optical micro components-production of SiO2 transparent films from quartz particles

Quartz particles (from US-SILICA, minusil-5, 99% purity) with a maximum particle size of 5 microns were mixed with electronic grade acetone to produce, due to the spontaneous evaporation of the acetone, a uniform porous layer of quartz on a tungsten support. The thickness of the layer was 1 mm. An oxidizing plasma flame (Ar-O₂) was used as the concentrated heat source to melt the layer so as to obtain a uniform solid silica film of a thickness of about 300 micron.

Such solid film appeared to be white but, after separation from the micron sized particles attached onto the back of this film, a transparent film was easily achievable. Simple cleaning was sufficient for that purpose.

### Example 3 - in the field of ceramics - production of a ceramic film from mixed alumina and silica particles

A mixture of 70 wt% Al2O3 and 30wt% SiO2 particles with a maximum diameter of 22,5 microns were used with acetone to produce, due to spontaneous evaporation of the acetone, a porous uniform layer having a thickness of 500 micrometers. An oxidizing plasma flame (Ar-O2) was used as the concentrated source so as to obtain a solid ceramic film having a thickness of about 200 microns. The non-melted particles at the back of the film were easily detachable. The solid ceramic film was as brittle as ceramic films obtained via more complicated and expensive prior art methods.

Experimental conditions, in particular key parameters such as the plasma gas flow rate and composition, the plasma power level as well the substrate distance (between the plasma flame and the support) and the support displacement velocity, as well as the reactor pressure (the reactor is here the enclosure where the porous film is exposed to plasma flame) are given herein below. The achievable solid film thickness starts from few tens microns to few millimetres with the highest thicknesses being achieved when an iterative multilayer process, with successive cycles of suspension spreading and surface melting, is followed.
- plate power : 15-45 kW
- plasma gas power rates (slpm) : 50-100 Ar, 0-5 H2, 0-15 He
- spray distance (cm) : 10-25
- displacement velocity (m/s) : 0.005-0.05
- reactor pressure (torr) : 400-650

### Example 4 - in the field of metallic filters and fixed bed catalysts - production of small and extra long porous films from Ni particles

This example illustrates the use of the mentioned process in the preparation of solid metallic and ceramic filtering mediums and membranes technology. Spherical Ni particles with maximum diameter of 10 microns were used to prepare a porous film of Ni. Ar-H2 plasma was used as the high heat flux source to purify and to sinter the particles.
The following table shows the filtration capacity of this porous film:

| **Type of powder** | **Filtration time (vacuum filteration,200 Torr, 2cm² filter surface area)** | **Recovery percentage** |
|---|---|---|
| **Fisher silica nanopowder, 15 nm, aggregated** | **20 min.** | **100 %** |
| **HcStark Si,** -8 **micron** | **15 min.** | **99** % |
| US **Silica SiO₂ , -5 micron** | **10 min.** | **96 %** |
| **Sino surplus quartz powder, -1 icron** | **20 min.** | **98 %** |

### Example 5 - in the field of protective films for corrosive environments - production of three dimensional films of silica

This example illustrates the use of the mentioned process in the shape forming industry. A suspension of 60 % quartz particles (maximum particles size: 10 microns) in methanol was prepared to cover the surface of a hexagonal nut by dip coating. O2-Ar plasma at 120 Torr was used as the concentrated heat source to form a solid film of SiO₂ on the surface of the nut. The resulting film was a replication of the nut surface.

### Example 6 - Effect of size distribution on the film quality and on the optimum process conditions.

Some experiments were conducted in order to investigate the possible effect of particles, agglomerates and aggregates size distribution on the quality of the prepared films.

A first experiment was conducted on three samples using different powder particles to prepare Si solid films:
Sample 1: Atlantic Equipment Engineers, Si powder, -325 MESH, electronic grade.
Sample 2: Atlantic Equipment Engineers, Si powder, 1-5 micron, 99% purity.
Sample 3: HCStark, Si powder, AX05, -10 micron, 99.995% purity.
The experimental conditions mentioned in example 1 were employed to prepare solid films from samples S1, S2, and S3. The results were better with sample S3 (uniform and bright films of silicon, usually characterizing a high purity film) than with samples S1 and S2. No clear explanation has been identified for this result, but it may mean that, in some cases, preferred size ranges (for example narrow ones) may exist for the powder particles, and that a good control of the size distribution may have an effect.

Other experiments were conducted so as to investigate the possible effect of ultrasound energy. Cole Parmer ultrasonic processor (model 130 W) with a 6 mm tip was used to break agglomerated particles held together by van der Walls forces. The experimental conditions of example 1 were employed. The result was not as good as without such ultrasound energy. No clear explanation has been found, but it may mean that agglomeration conditions of the particles may have some effect on the final film.

However, it is assumed that the man skilled in the art which intends to identify optimum process conditions to produce a given film from given particulate materials, may investigate by some tests the effect of several parameters, including the size distribution and the possible agglomeration of the particles.

### Example 7 - Effect of maximum particles size on the film thickness and optimum process conditions.

Two samples of Si powder, one with the maximum particles size of 8 microns (HC Starck, Si MP grade AX05) and the other with the maximum particles size of 60 microns (AEE electronic grade silicon) were mixed in equal ratios to prepare a solid film of silicon. The experimental conditions mentioned in example 1 were employed to prepare solid films from these samples. Such films had a thickness between 140 and 550 micron and manipulation of the film was easy.

It will be appreciated that:
- the method may be used with smaller powder particles than in prior art methods, i.e. with powder particles the size of which is measured in microns (typically between some microns and a few tens of microns),
- the concentrated clean heat source may be thermal radio frequency inductively coupled plasma (RF plasma) since this heat source is very pure , avoiding any pollution of the materials to be melted/sintered,
- all kinds of plasma gases, even with reactive gases, can be used, leading to possible controlled chemical reaction between the reactive plasma gases and the film to be formed, examples are Ar-H2 RF thermal plasma (in particular for silicon), Ar-H2/Ar reactive gas plasma flame (in particular for very high purity solid metal films),
- other clean concentrated heat sources may be used, such as lasers, or any controlled flow of hot gases,
- thus the final solid film may be of ultra purity, for example ultra pure silicon, or Ar-O2 FR plasma (in particular for solid ceramic films from oxides),
- the microstructure of the solid film may be selected from amorphous to crystalline, by appropriate selection of the following parameters : transport shaft speed, torch-powders distance, available energy of the high heat flux source (enthalpy), rate of cooling of the formed film
- the support may be of a wide variety of materials, typically refractory materials, preferably metallic materials,
- the chemical composition of the film can be controlled by selecting the solid particles of the powder and by setting the composition of the reactive hot gases of the heat source,
- the high melting point support may be planar, but also a non-planar one, allowing the formation of non-planar solid films by means of replication (3D shape forming of solid films), for example by iterating the cycles of spreading the suspension, solvent elimination and surface melting, layer by layer ; it may be noted here that the layer may be parallel to the non-planar support when the viscosity of the suspension is sufficiently high (the shape of the layer matches the shape of the support despite the action of gravity), whereas an alternative consists in allowing the first layers to have non uniform thicknesses between the support and their upper horizontal surface,
- the thickness of the solid film can be adjusted by an appropriate selection of the size of the particles and of the number of passes or layers (cycle iteration),
- the film quality depends on the rate of the heat flux to the particles and the flow pattern of the surrounding gas, and on the distance between the porous layer and the flame,
- the solid film may be multilayer, and possibly multimaterial and composite provided that the successive suspensions used for the successive layers are different,
- the resulting solid film, in case of semiconductor materials, may be doped by injecting appropriate elements in the direct contact heat source ; an example for n-doping element is boron and an example for p-doping element is phosphorous,
- the production method may be continuous so as to produce solid films of any length or dimensions, instead of being conducted by batches,
- the rate of production may be as high as several tens of centimetres per minute,
- the method may be used with particles of various natures, including polymeric particles, for example polyethylene-polypropylene so as to produce polymer composite (of course, the power of the heat source is to be adjusted accordingly),
- the resulting solid film is easily detachable, without any substantial waste,
- the method may be used in a wide variety of technical fields such as micro-electronics, metallurgy, ceramics, filters and fixed bed catalysts, and composite polymer materials,
- the method allows a mass production of pure, cheap and good quality solid and porous films.

## Claims

1. A method for producing a solid/porous film comprising the following steps:
- preparing a suspension of solid particles in a solvent (1) and spreading (3, 13) this suspension as a uniform layer of powder particles on a high melting point support (2, 12),
- eliminating the solvent so as to dry the uniform layer of powder particles into a dried porous uniform layer (4, 14),
- surface melting/sintering (5, 15, 15') of the dried uniform layer by direct contact with a concentrated heat source having a controlled gas composition so as to melt/sinter this layer into a solid/porous film.

2. The method of claim 1, further comprising a step of removing the solid/porous film from the high melting point support.

3. The method of any one of claims 1 or 2, wherein the suspension comprises a solid content in the range of 10-60 wt %.

4. The method of any one of claims 1 to 3, wherein the spreading step comprises spraying the suspension onto the support.

5. The method of any one of claims 1 to 4, wherein the powder particles all consist of one and a same material.

6. The method of any one of claims 1 to 4, wherein the powder particles comprise a mixture of at least two types of powder particles having different material compositions.

7. The method of any one of claims 1 to 6, wherein the concentrated heat source is a reactive gas plasma flame so that the material of the dried porous layer is purified when it is melted by the plasma flame.

8. The method of any one of claims 5 or 6, wherein the powder particles consist of at least one semiconductor material and the concentrated heat source comprises a plasma flame.

9. The method of claim 8, wherein at least one doping element is injected into the plasma flame so as to be melted together with dried porous layer.

10. The method of any one of claims 5 or 6, wherein the powder particles consist of at least one oxide material and the concentrated heat source comprises a plasma flame.

11. The method of any one of claims 5 or 6, wherein the powder particles are selected in the group of spherical Ni or ceramics, the heat source comprises a plasma and the heat source flux and exposition time are set so that the particles sinter together and a porous film is formed.

12. The method of any one claims 5 or 6, wherein the powder particles consist of polymer materials.

13. The method of any one of claims 1 to 12, wherein the particle size is comprised within the range of 0.1-100 microns and the thickness of the solid film is comprised within the range of 50-1000 microns.

14. The method of any one of claims 1 to 13, wherein the high melting point support is an endless moving belt and the spreading step and the melting/sintering step are performed by spreading and melting/sintering stations located along this endless moving belt, so that there is a continuous formation of the solid/porous film.

15. The method of any one of claims 1 to 14, further comprising at least another cycle comprising the preparation of a suspension, the spreading of the suspension on the solid film as an additional layer, the elimination of the solvent and the melting of this additional layer.

## Patentansprüche

1. Verfahren zum Erzeugen eines festen/porösen Filmes, mit den folgenden Schritten, dass:
- eine Suspension aus festen Partikeln in einem Lösemittel (1) hergestellt wird und diese Suspension als eine gleichförmige Schicht aus Pulverpartikeln auf einem Träger (2, 12) mit hohem Schmelzpunkt ausgebreitet (3, 13) wird,
- das Lösemittel so beseitigt wird, dass die gleichförmige Schicht aus Pulverpartikeln in eine getrocknete poröse gleichförmige Schicht (4, 14) trocknet,
- die getrocknete gleichförmige Schicht durch direkten Kontakt mit einer konzentrierten Wärmequelle an der Oberfläche geschmolzen/gesintert (5, 15, 15') wird, die eine gesteuerte Gaszusammensetzung besitzt, um so diese Schicht in einen festen/porösen Film zu schmelzen/ sintern.

2. Verfahren nach Anspruch 1,
ferner mit einem Schritt zum Entfernen des festen/porösen Filmes von dem Träger mit hohem Schmelzpunkt.

3. Verfahren nach einem der Ansprüche 1 oder 2,
wobei die Suspension einen Feststoffgehalt im Bereich von 10 bis 60 Gew.-% umfasst.

4. Verfahren nach einem der Ansprüche 1 bis 3,
wobei der Ausbreitungsschritt umfasst, dass die Suspension auf den Träger gesprüht wird.

5. Verfahren nach einem der Ansprüche 1 bis 4,
wobei die Pulverpartikel alle aus ein und demselben Material bestehen.

6. Verfahren nach einem der Ansprüche 1 bis 4,
wobei die Pulverpartikel eine Mischung aus zumindest zwei Typen von Pulverpartikeln, die verschiedene Materialzusammensetzungen besitzen, umfassen.

7. Verfahren nach einem der Ansprüche 1 bis 6,
wobei die konzentrierte Wärmequelle eine Plasmaflamme aus reaktivem Gas ist, so dass das Material der getrockneten porösen Schicht gereinigt wird, wenn es durch die Plasmaflamme geschmolzen wird.

8. Verfahren nach einem der Ansprüche 5 oder 6,
wobei die Pulverpartikel aus zumindest einem Halbleitermaterial bestehen und die konzentrierte Wärmequelle eine Plasmaflamme umfasst.

9. Verfahren nach Anspruch 8,
wobei zumindest ein Dotierelement in die Plasmaflamme injiziert wird, so dass dieses zusammen mit der getrockneten porösen Schicht geschmolzen wird.

10. Verfahren nach einem der Ansprüche 5 oder 6,
wobei die Pulverpartikel aus zumindest einem Oxidmaterial bestehen und die konzentrierte Wärmequelle eine Plasmaflamme umfasst.

11. Verfahren nach einem der Ansprüche 5 oder 6,
wobei die Pulverpartikel in der Gruppe aus kugelförmigem Ni oder Keramik gewählt sind, die Wärmequelle ein Plasma umfasst und der Wärmequellenfluss sowie die Expositionszeit so eingestellt sind, dass die Partikel miteinander versintert werden und ein poröser Film gebildet wird.

12. Verfahren nach einem der Ansprüche 5 oder 6,
wobei die Pulverpartikel aus Polymermaterialien bestehen.

13. Verfahren nach einem der Ansprüche 1 bis 12,
wobei die Partikelgröße in dem Bereich von 0,1 bis 100 µm enthalten ist und die Dicke des festen Filmes in dem Bereich von 50 bis 1000 µm enthalten ist.

14. Verfahren nach einem der Ansprüche 1 bis 13,
wobei der Träger mit hohem Schmelzpunkt ein sich endlos bewegendes Band ist und der Ausbreitungsschritt wie auch der Schmelz/ Sinterschritt durch Ausbreitungs- und Schmelz-/ Sinter-Stationen ausgeführt werden, die entlang dieses sich endlos bewegenden Bandes angeordnet sind, so dass eine kontinuierliche Ausbildung des festen/porösen Filmes stattfindet.

15. Verfahren nach einem der Ansprüche 1 bis 14,
ferner mit zumindest einem weiteren Zyklus, der die Herstellung einer Suspension, die Ausbreitung der Suspension auf dem festen Film als eine zusätzliche Schicht, die Beseitigung des Lösemittels und das Schmelzen dieser zusätzlichen Schicht umfasst.

## Revendications

1. Procédé de production d'un film solide/poreux comprenant les étapes suivantes :
- de préparation d'une suspension de particules solides dans un solvant (1) et d'étalement (3, 13) de cette suspension sous forme d'une couche uniforme de particules de poudre sur un support (2, 12) à haut point de fusion ;
- d'élimination du solvant de façon à sécher la couche uniforme de particules de poudre pour donner une couche uniforme poreuse séchée (4, 14) ;
- de fusion/frittage (5, 15, 15') de surface de la couche uniforme séchée par contact direct avec une source de chaleur concentrée ayant une composition gazeuse maîtrisée de façon à fondre/fritter cette couche pour donner un film solide/poreux.

2. Procédé selon la revendication 1, comprenant en outre une étape d'enlèvement du film solide/poreux du support à haut point de fusion.

3. Procédé selon l'une quelconque des revendications 1 ou 2, dans lequel la suspension comprend un contenu solide dans la fourchette de 10 à 60 % en poids.

4. Procédé selon l'une quelconque des revendications 1 à 3, dans lequel l'étape d'étalement comprend la pulvérisation de la suspension sur le support.

5. Procédé selon l'une quelconque des revendications 1 à 4, dans lequel les particules de poudre sont toutes constituées d'une seule et même matière.

6. Procédé selon l'une quelconque des revendications 1 à 4, dans lequel les particules de poudre comprennent un mélange d'au moins deux types de particules de poudre ayant des compositions de matière différentes.

7. Procédé selon l'une quelconque des revendications 1 à 6, dans lequel la source de chaleur concentrée est une flamme de plasma gazeux réactif de sorte que la matière de la couche poreuse séchée est purifiée lorsqu'elle est fondue par la flamme de plasma.

8. Procédé selon l'une quelconque des revendications 5 ou 6, dans lequel les particules de poudre sont constituées d'au moins une matière semi-conductrice et dans lequel la source de chaleur concentrée comprend une flamme de plasma.

9. Procédé selon la revendication 8, dans lequel au moins un élément dopant est injecté dans la flamme de plasma de façon à être fondu conjointement avec la couche poreuse séchée.

10. Procédé selon l'une quelconque des revendications 5 ou 6, dans lequel les particules de poudre sont constituées d'au moins une matière à base d'oxyde et dans lequel la source de chaleur concentrée comprend une flamme de plasma.

11. Procédé selon l'une quelconque des revendications 5 ou 6, dans lequel les particules de poudre sont choisies dans le groupe du Ni sphérique ou des céramiques, dans lequel la source de chaleur comprend un plasma et dans lequel le flux de source de chaleur et le temps d'exposition sont fixés de façon que les particules se frittent les unes aux autres et qu'un film poreux soit formé.

12. Procédé selon l'une quelconque des revendications 5 ou 6, dans lequel les particules de poudre sont constituées de matières à base de polymères.

13. Procédé selon l'une quelconque des revendications 1 à 12, dans lequel la taille de particule est comprise dans la fourchette de 0,1 à 100 micromètres et dans lequel l'épaisseur du film solide est comprise dans la fourchette de 50 à 1000 micromètres.

14. Procédé selon l'une quelconque des revendications 1 à 13, dans lequel le support à haut point de fusion est une bande mobile sans fin et dans lequel l'étape d'étalement et l'étape de fusion/frittage sont exécutées par des postes d'étalement et de fusion/frittage situés le long de cette bande mobile sans fin, de sorte qu'il y a une formation continue du film solide/poreux.

15. Procédé selon l'une quelconque des revendications 1 à 14, comprenant en outre au moins un autre cycle comprenant la préparation d'une suspension, l'étalement de la suspension sur le film solide en tant que couche additionnelle, l'élimination du solvant et la fusion de cette couche additionnelle.
